# EUROPEAN PATENT APPLICATION

(11) **EP 2 899 179 A1**
(43) Date of publication of application: **29.07.2015**
(21) Application number: 14152451.2
(22) Date of filing: 24.01.2014
(51) Int. Cl.: C07C 65/38, C07C 233/65, C07D 209/48, C07D 307/89, C08G 69/48, C08L 77/06

(54) **Combination of cross-linkers including carbon-carbon triple bonds**

(71) Applicant: Nexam Chemical AB, 223 81 Lund (SE)
(72) Inventor: Rosenberg, Jan-Erik, 311 41 FALKENBERG (SE); Röme, Daniel, 226 51 LUND (SE); Momcilovic, Dane, 226 51 LUND (SE)
(74) Representative: Ström & Gulliksson AB

(57) **Abstract**

A composition comprising a polymer, or an oligomer, comprising cross-linking moiety, which moiety comprises a carbon-carbon triple bond; and a molecule comprising a carbon-carbon triple bond, wherein the thermal curing behavior of said molecule is different from the one of said polymer or oligomer.

## Description

### Field of the invention

The present invention relates to composition comprising a polymer, or an oligomer, comprising a cross-linking moiety, which moiety comprises a carbon-carbon triple bond, the thermal curing behavior of the composition being different from the one of the neat polymer, or oligomer. Further, the present invention relates to a process for altering the thermal curing behavior of a polymer, or an oligomer, comprising a cross-linking moiety, which moiety comprises a carbon-carbon triple bond.

### Background

Aromatic polyimides represent a class of high-end polymers. They have inherent good properties, such as wear and friction properties, good electrical properties, radiation resistance, good cryogenic temperature stability and good flame retardant properties. Therefore, aromatic polyimides are used in the electronics industry for, e.g. flexible cables, as an insulating film on magnet wire and for medical tubing. Polyimide materials are also used in high or low temperature exposed applications as structural parts where the good temperature properties are a prerequisite for the function.

Similar to polyimides, also aromatic polyamides (e.g. Kevlar) and semi-aromatic polyamides (e.g. Amodel, Grivory, Ultramid T, and Vestamid HTplus) are high-end polymers. They have inherent good properties, e.g. higher temperature resistance and chemical resistance compared to aliphatic polyamides.

While, such aromatic polyimides have good mechanical, thermal and solvent resistance, there anyhow has been interest in the art of further improving these properties. Especially, it has been of interest to improve the processability, while keeping the mechanical properties, of polyimides for use in airplanes and aerospace applications.

Those needs led to the introduction of various cross-linking technologies. As the polymer chains are cross-linked, they may be shorter whilst the mechanical properties are maintained or even improved. Shorter polymer chains have the advantage of being easier to process, as the viscosity of the polymer melt is lower. Further, cross-linking will improve the mechanical, thermal and solvent resistance for a given polymer.

During the nineteen nineties, phenylethynyl phthalic anhydride (often denoted PEPA) emerged as heat stable end-capping cross-linker for amino terminated imide oligomers (cf. US 5,567,800).

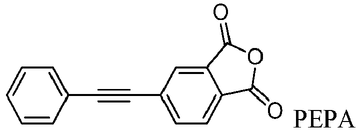

The resulting phenyl ethynyl terminated imide oligomers were denoted PETIs. Further, arylethynyl phthalic anhydrides, such as PEPA, have been disclosed (cf. US 5,493,002) to have particular application as end-cappers in high performance/high temperature thermosets, which include amine terminal or amine pendant groups. Especially, end-capping by PEPA is disclosed to be suitable for use in high T_{g} amine terminated polymers, such as polyimides, aromatic and semi-aromatic polyamides, and poly(arylene ethers).

The curing temperature of PEPA end-capped polyimides are disclosed to be in the range 380-420°C (cf. US 5,493,002), whereby high Tg amine terminated polymers, e.g. polyimides, may be processed without initiating curing.

In order to provide end-cappers having lower curing temperature and thus being suitable for use in polymers with lower thermal resistance and lower processing temperatures, additional acetylenical cross-linkers have been developed. In WO 2011/128431 to the present applicant, the cross-linker PETA (5-(3-phenylpropioloyl)isobenzofuran-1,3-dione) is disclosed. PETA has lower curing temperature than PEPA. Another cross-linker having lower curing temperature than PEPA, i.e. MEPA (5-(prop-1-yn-1-yl)isobenzofuran-1,3-dione), is disclosed in WO 2012/052550 to the present applicant.

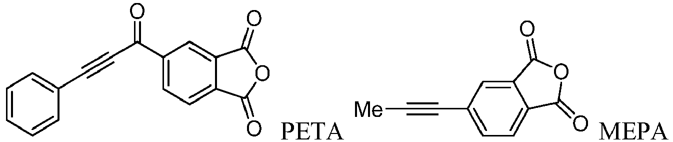

Upon heating of polymers end-capped by acetylenical cross-linkers, such as PEPA, PETA and MEPA, the triple bonds will eventually react and cross-link to provide a cross-linked polymeric material, whereby improving the heat and chemical resistance, as well as the mechanical strength of the material. Using PEPA will require a heating to at least 350°C to cure the PETI (cf. US 5,567,800) and even somewhat higher, i.e. 380 to 420°C, to cure PEPA end-capped polyimides (cf. US 5,493,002).

However, for some applications such a high curing temperature profile may be considered a problem. For instance, the properties (such as the coefficient of thermal expansion) of flexible polyimide films, having a melting temperature below 350°C, may be improved via cross-linking. However, the high temperature (above 350 °C) needed to initiate cross-linking will make the processing impossible. Further, also for economic reasons the possibility to lower the curing temperature and/or increase the curing rate may be advantageous. Often such polymers are still to be processed above 300°C. PEPA may accordingly not always be replaced with an alternative cross-linker, e.g. MEPA, in applications requiring a lower curing temperature or a higher curing rate. Further, PEPA has the advantage of withstanding processing temperatures up to and even above 300°C without curing being initiated.

A process for modifying the curing temperature profile of PEPA-based system would thus be highly interesting, as it would allow for processing of "inert" acetylenical polymers, which subsequently may be activated and cured at temperatures tolerated by the molecular backbone.

As already described also acetylenical cross-linkers for thermoplastic polymers are available in the art. Thermoplastic polymers are processed in a wide temperature span above their softening point (Tg or melting point), but below their degradation temperature. It is often desired to affect the thermal curing behavior within this window to mirror/suit the process or parts manufacture. Especially, semi-aromatic polyamides end-capped by PEPA, as well as PA46 and PA66 end-capped by PEPA, represent types of acetylenical polymers, which would benefit from an altered thermal curing behavior.

Further, for some applications, e.g. cross-linking of PA66 and PA12, it may be of interest to use cross-linking systems cured somewhat slower than MEPA or EPA based systems, but cured at temperatures well below the one used for PEPA based systems, such that the systems may be processed at acceptable melt viscosities. The melt viscosity of the system will gradually increase upon curing, i.e. cross-linking, and will eventually reach levels making further processing difficult. Could the curing rate be slowed down, the processing could be finished before the melt viscosity is too high. The curing could then be finalized subsequently to processing at temperatures tolerated by the molecular backbone.

As an alternative to the provision of further cross-linkers with other thermal curing behavior, the curing temperatures of known acetylenical cross-linkers may be altered by catalysis. In WO 2011/141578 to the present applicant, a catalytic concept comprising the use of non-protogenic amines is disclosed. However, catalysis may for some applications be a less preferred concept, as it introduces further components into the polymer composition.

Further, the disadvantages of the high curing temperature of PEPA have been recognized in the art (cf. US 6,344,523). Use of sulfur or organic sulfur derivatives has been disclosed as curing promoters which may lower the curing temperature profile of PETIs. However, the introduction of such promoters suffers from other disadvantages. In particular the curing, i.e. one sulfur radical ultimately forming a thiophene structure and a by-product which is unreacted and may be volatile, furthermore the additive makes it difficult to attain cross-linking as the mechanism lead to a chain extended polymer.

Accordingly, there is a need in the art for further cross-linking concepts for altering the curing temperature profile, i.e. the thermal curing behavior, of compositions comprising acetylenical cross-linkers.

### Summary

Consequently, the present invention seeks to mitigate, alleviate, eliminate or circumvent one or more of the above-identified deficiencies in the art and disadvantages singly or in any combination by providing, according to an aspect, a composition comprising:
- a polymer, or an oligomer, comprising cross-linking moiety, which moiety comprises a carbon-carbon triple bond; and
- a molecule comprising a carbon-carbon triple bond;
wherein the thermal curing behavior of said molecule is different from the one of said polymer or oligomer.

According to another aspect use of molecule comprising a carbon-carbon triple bond for altering the thermal curing behavior of polymer, or an oligomer, comprising a cross-linking moiety, which moiety comprises a carbon-carbon triple bond, wherein the thermal curing behavior of said molecule is different from the one of said polymer or oligomer is provided.

According to another aspect, a process for altering the thermal curing behavior of polymer, or an oligomer, comprising a cross-linking moiety, which moiety comprises a carbon-carbon triple bond is provided. Such a process comprises the steps of:
- providing a polymer, or an oligomer, comprising a cross-linking moiety, which moiety comprises a carbon-carbon triple bond;
- adding a molecule comprising a carbon-carbon triple bond and having a thermal curing behavior different from the one of the polymer or oligomer, to provide a composition with altered thermal curing behavior compared to the one of the provided polymer or oligomer.

In a preferred aspect of such a composition, such use, and such a method, the polymer or oligomer comprises a moiety according to formula (I) and the molecule comprises a moiety according to formula (II),

A1-≡-B1- (I)

A2-≡-B2- (II)

wherein
A1≠A2 and/or B1≠B2;
A1 and A2 are, independently of each other, selected from the group consisting of H, methyl, a -CR₁R₂- moiety, wherein each of R₁ and R₂, is hydrogen or a chemical bond, an aryl, such as phenyl, an aromatic hydrocarbon moiety, such as a benzene moiety, and a -C(O)- moiety;
B1 and B2 are, independently of each other, selected from the group consisting of a -CR₁R₂- moiety, wherein each of R₁ and R₂, is hydrogen or a chemical bond, an aromatic hydrocarbon moiety, such as a benzene moiety, and a -C(O)- moiety;
at least B1 is bound, directly or indirectly, to the polymer or oligomer; and
at least B2 is bound, directly or indirectly, to the molecule.

Especially, in such a composition, in such use, and in such a method, the polymer, or oligomer, may comprise a residue of PEPA (phenylethynyl phthalic anhydride), EPA (ethynyl phthalic anhydride), PETA (5-(3-phenylpropioloyl)isobenzofuran-1,3-dione), MEPA (5-(prop-1-yn-1-yl)isobenzofuran-1,3-dione) or EBPA (5,5'-(ethyne-1,2-diyl)bis(isobenzofuran-1,3-dione); and the molecule may comprise a residue of PEPA (phenylethynyl phthalic anhydride), EPA (ethynyl phthalic anhydride), PETA (5-(3-phenylpropioloyl)isobenzofuran-1,3-dione), MEPA (5-(prop-1-yn-1-yl)isobenzofuran-1,3-dione), or EBPA (5,5'-(ethyne-1,2-diyl)bis(isobenzofuran-1,3-dione). Further, the composition, the use, or the method may comprise at least two different types of residues selected from the group consisting of residues of PEPA (phenylethynyl phthalic anhydride), EPA (ethynyl phthalic anhydride), PETA (5-(3-phenylpropioloyl)isobenzofuran-1,3-dione), MEPA (5-(prop-1-yn-1-yl)isobenzofuran-1,3-dione) and EBPA (5,5'-(ethyne-1,2-diyl)bis(isobenzofuran-1,3-dione).

Particularly, the molecule may comprise a residue of diamine comprising two aminomethylen-groups, such as a diamine selected from the group consisting of:
phenylen di-C₁₋₄ alkaneamines, e.g. 1,3-phenylenedimethanamine, 1,4-phenylenedimethanamine;
alkyl substituted and unsubstituted C₄₋₁₂ alkylenediamines, e.g. hexamethylene diamine, pentamethylene diamine, 2,2,4-trimethyl-hexamethylene diamine, 2,4,4-trimethyl-hexamethylene diamine, and 1,4-diaminobutane; and
diamines comprising a cyclohexane moiety, e.g. cyclohexane-1,4-diamine, cyclohexane-1,3-diamine, cyclohexane-1,4-diyldimethanamine, cyclohexane-1,3-diyldimethanamine, and bicyclo[2.2.1]heptane-2,5-diyldimethanamine; or
wherein said molecule comprises a residue of aromatic diamine, such as a residue of 1,4-diaminobenzene and 1,3-diaminobenzene.

Further advantageous features of the invention are defined in the dependent claims. In addition, advantageous features of the invention are elaborated in embodiments disclosed herein.

### Drawings

FIG 1 depicts a DSC scan for a PEPA end-capped oligoimid.
FIG 2 depicts DSC scan for PD-PEPA.
FIG 3 depicts an overlay of DSC scans for PD-MEPA (top), mixture of PD-MEPA/PD-PEPA(mid) and PD-PEPA(bottom).
FIG 4A depicts the temperature profile used in Fig 4B and 4C.
FIG 4B depicts the viscosity profile during heating of high amino PA66 + 2.1% MEPA and 2.3% HD-MEPA (upper curve) and high amino PA66 + 2.9% PEPA and 2.4% HD-MEPA (lower curve), respectively.
FIG 4C depicts the viscosity profile during heating of high amino PA66 + 2.1% MEPA and 4.5% HD-MEPA (upper curve) and high amino PA66 +2.1%MEPA och 5.7% HD-PEPA (lower curve), respectively.

### Description

### Definitions:

In the context of the present application and invention, the following definitions apply:
As used herein, "alkyl" used alone or as a suffix or prefix, is intended to include both branched and straight chain saturated aliphatic hydrocarbon groups having from 1 to 12 carbon atoms or if a specified number of carbon atoms is provided then that specific number is intended. For example "C1-6 alkyl" denotes alkyl having 1, 2, 3, 4, 5 or 6 carbon atoms. When the specific number denoting the alkyl-group is the integer 0 (zero), a hydrogen-atom is intended as the substituent at the position of the alkyl-group. For example, "N(C0 alkyl)₂" is equivalent to "NH₂" (amino) and "OC0 alkyl is equivalent to "OH" (hydroxy).

Examples of alkyl include, but are not limited to, methyl, ethyl, n-propyl, i-propyl, n-butyl, i-butyl, sec-butyl, t-butyl, n-pentyl, neo-pentyl, and hexyl.

As used herein, "alkylenyl" or "alkylene" used alone or as a suffix or prefix, is intended to include straight chain saturated aliphatic hydrocarbon groups having from 1 to 12 carbon atoms or if a specified number of carbon atoms is provided then that specific number is intended. For example "C1-6 alkylenyl " "C1-6 alkylene "denotes alkylenyl or alkylene having 1, 2, 3, 4, 5 or 6 carbon atoms. When the specific number denoting the alkylenyl or alkylene-group is the integer 0 (zero), a chemical bond is intended to link the groups onto which the alkylenyl or alkylene-group is substituted. For example, "NH(C0 alkylene)NH₂" is equivalent to "NHNH₂" (hydrazino). As used herein, the groups linked by an alkylene or alkylenyl-group are intended to be attached to the first and to the last carbon of the alkylene or alkylenyl-group. In the case of methylene, the first and the last carbon is the same. For example, "H₂N(C2 alkylene)NH₂", "H₂N(C3 alkylene)NH₂", "N(C4 alkylene)", "N(C5 alkylene)" and "N(C2 alkylene)₂NH" is equivalent to 1,2-diamino ethane, 1,3-diamino propane, pyrrolidinyl, piperidinyl and piperazinyl, respectively.

Examples of alkylene or alkylenyl include, but are not limited to, methylene, ethylene, propylene, and butylene.

As used herein, the term "aryl" refers to a ring structure, comprising at least one aromatic ring. An aryl may be made up of from 5 to 14 carbon atoms. Ring structures containing 5, 6, or 7 carbon atoms would be single-ring aromatic groups, for example phenyl. Ring structures containing more than 7 carbon atoms, such as 8, 9, 10, 11, 12, 13, or 14 carbon atoms, would be polycyclic, for example naphthyl. The aryl may be substituted at one or more ring positions. The term "aryl" also includes polycyclic ring systems having two or more cyclic rings in which two or more carbons are common to two adjoining rings (the rings are "fused rings") wherein at least one of the rings is aromatic, for example, the other cyclic rings may be cycloalkyls, e.g. 2,3-dihydro-1*H-*indeneyl, cycloalkenyls, e.g. 1*H-*indene, cycloalkynyls, and/or aryls, e.g. naphthyl.

The terms ortho, meta and para apply to 1,2-, 1,3- and 1,4-disubstituted benzenes, respectively. For example, the names 1,2-dimethylbenzene and orthodimethylbenzene are synonymous.

### Embodiments

Upon continuously increasing the temperature of a composition comprising an acetylenical cross-linker, such as a polyimide end-capped with PEPA, the carbon-carbon triple bonds in the system will eventually start to react with each other. The cross-linking is believed to include a sequence of exothermic reaction steps, including chain-extension, probably due to ethynyl-to-ethynyl reactions, of the material and subsequent cross-linking, probably due to pericyclic reactions, e.g. Diels-Alder reactions and ene-reactions. Typically, the curing temperature profile may be studied by differential scanning calorimetry (DSC), as well as melt rheology measurements. DSC will provide information regarding the temperature required to initiate curing, while melt rheology will provide insight into the curing onset as well as into the degree of chain-extension and cross-linking, as such reactions will increase the viscosity of the material.

The melt viscosity of a polymer affects its processablity. A too high melt viscosity will make it difficult to process the composition, as the shear forces to generate sufficient flow will be extremely high. Thus, polymers are often processed at temperatures well above their softening point (glass transition temperature - Tg - or melting point - Tm). An increased processing temperature results in lowered viscosity, which may facilitate processing. However, the degradation temperature for the polymer of concern sets an upper limit for the processing temperature. Thus, polymers are processed at temperatures in between the softening point and the degradation temperature.

In processing and curing of compositions comprising an acetylenical cross-linker, not only the temperature required for initiating curing, but also the curing rate is of interest. Provided that the curing rate not is too high, some curing may be tolerated already during processing without rendering further processing, such as extrusion and injection molding, impossible.

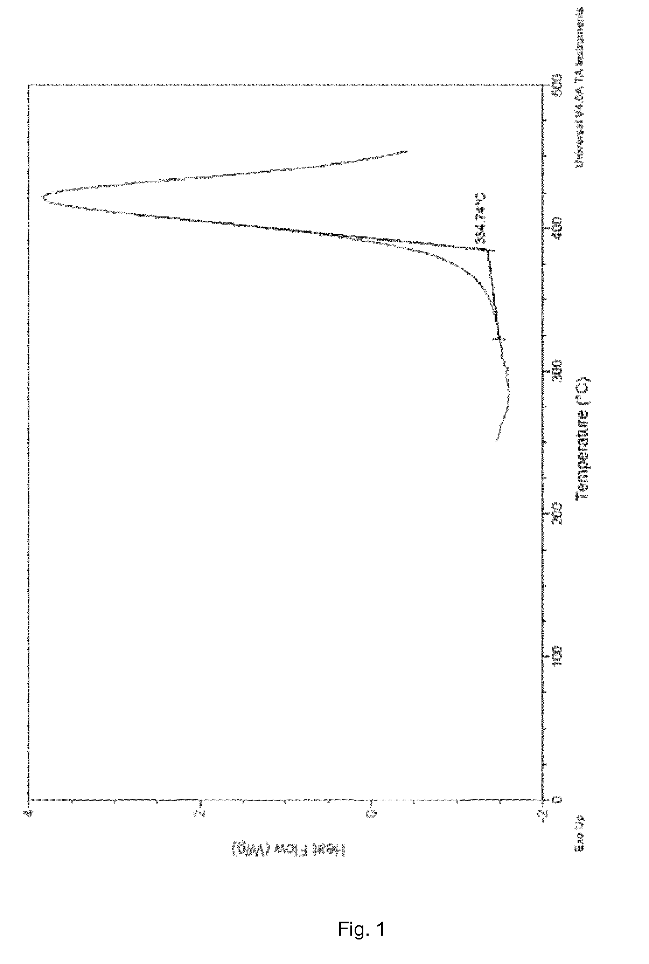

As can be seen in FIG. 1, a peak corresponding to exothermic heat flow, i.e. curing, is seen upon continuously increasing the temperature of an oligomer end-capped with an acetylenical cross-linker. The exact shape of the peak, e.g. the temperature at which cross-linking is initiated and completed, as well as the temperature curing maximum, will depend on the temperature ramping profile applied. While the temperature at which cross-linking is initiated in principle is constant, the shape of the exotermic peak will, at least partly, be affected, by the temperature ramping profile applied.

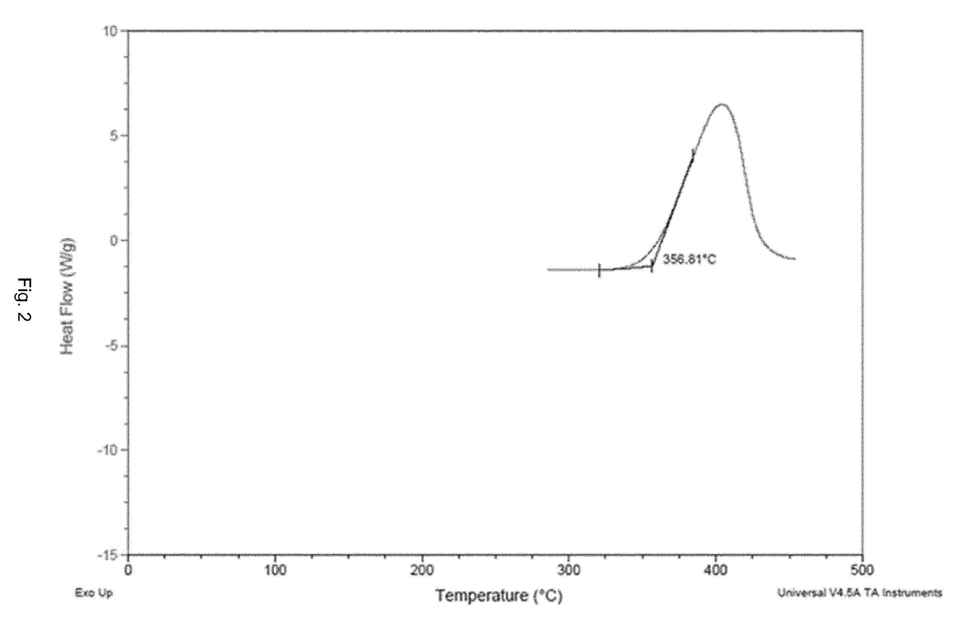

The curing temperature profile of different acetylencial cross-linkers is different. In general, the chemical groups next to the carbon-carbon triple bond will through electronic and steric factors determine the curing temperature profile. Furthermore, the mobility of the system of which the acetylencial cross-linkers is part, will affect the curing temperature profile but to less extent. As can be seen from FIG. 2 the curing temperature profile of low molecular weight PEPA end-capped phenylene diamine, a model system for studying curing of PEPA, is similar to the one of oligoimide end-capped with PEPA (cf. FIG 1).

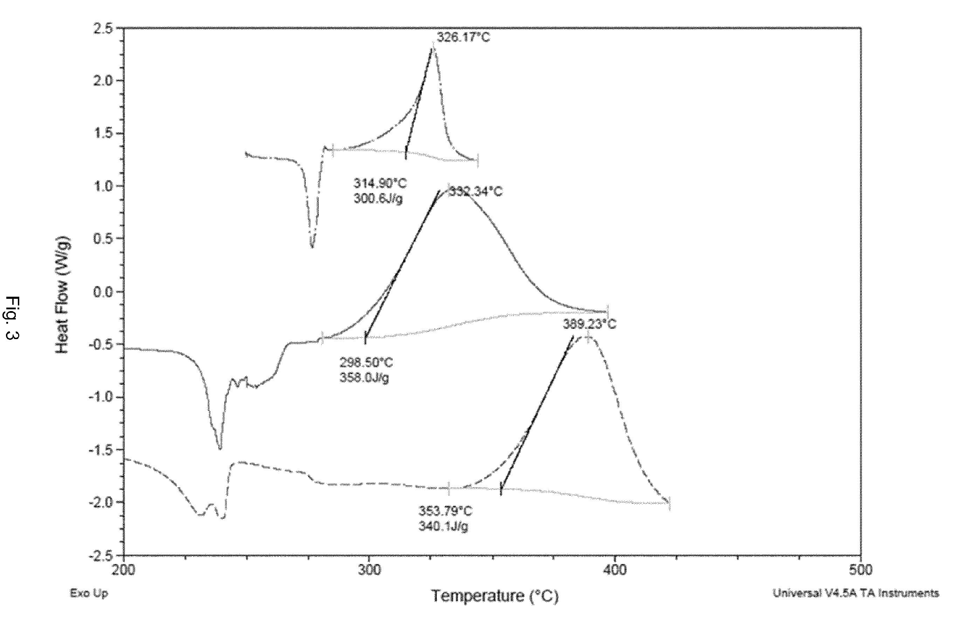

The present inventors have surprisingly found that combination of PEPA on one hand and MEPA on the other provides systems having another thermal curing behavior than the two individual cross-linkers if cured separately (cf. FIG 3). While the onset temperature for the curing is approximately the same, DSC-scans indicate that the curing mechanism is another. Especially, the curing of PEPA is completed at significantly lower temperatures and the curing of MEPA, from one perspective, seems to require higher temperatures to complete. The relative molar amount of the two cross-linkers will affect the thermal curing behavior.

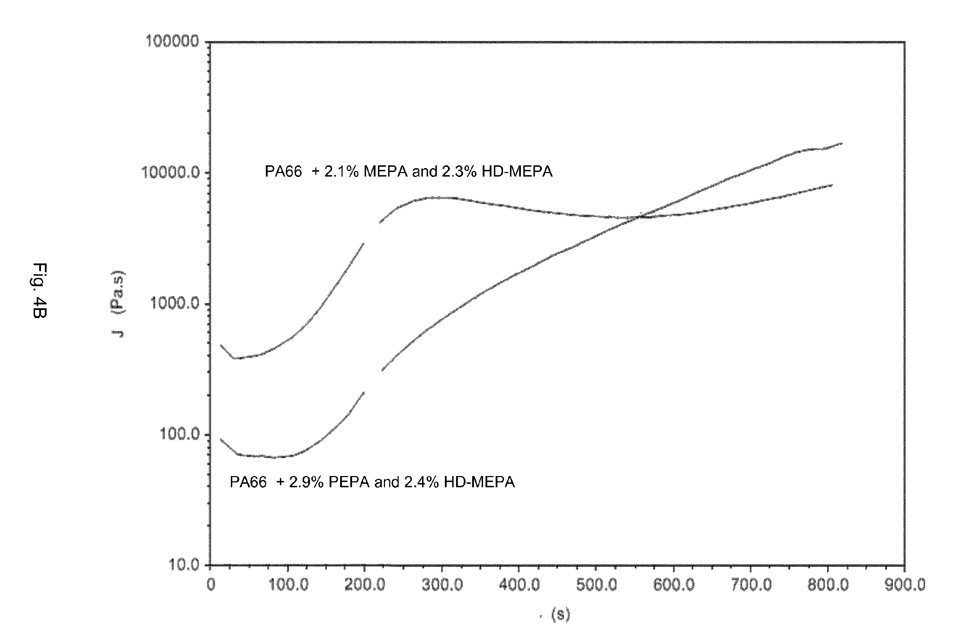

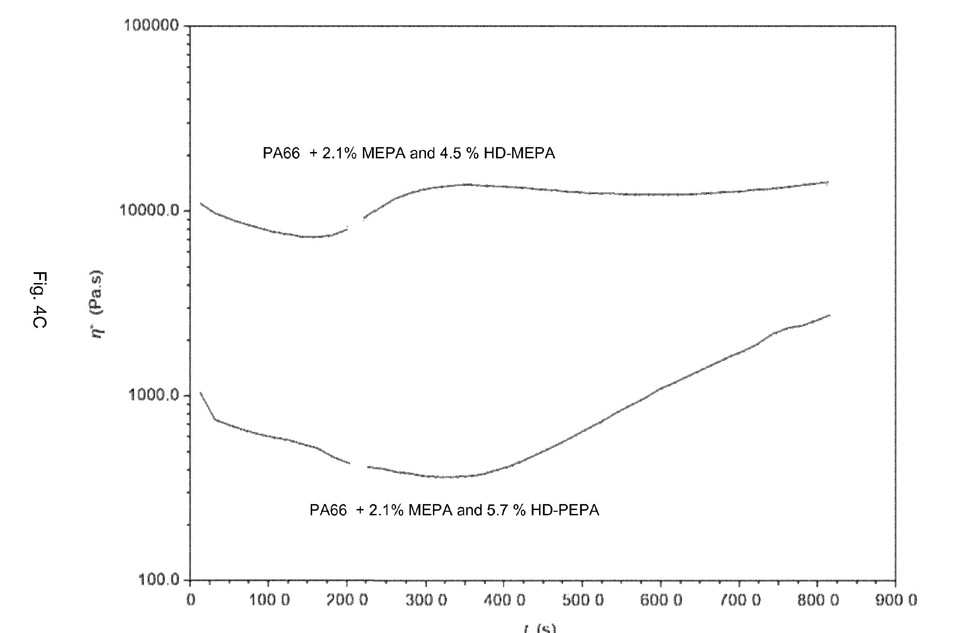

Further, as can be seen from FIG 4b exchanging the cross-linker on the polymer does not affect the ultimate melt viscosity. However, the onset of the viscosity increase is shifted and the time required to attain the ultimate viscosity is prolonged. The somewhat higher initial viscosity for the PA-MEPA compared to the PA-PEPA indicates that some curing of MEPA has taken place already during compounding of PA-MEPA. FIG 4c shows that it is not as effective in this case to exchange the cross-linker of the oligomer/molecule as it retards the reaction too much for the specific example. The high initial viscosity for the PA-MEPA//HD-MEPA compound indicates that curing of MEPA has taken place already during compounding of the system.

Thus, it has been revealed that combined use of two distinct acetylenical cross-linkers, having different thermal curing behavior, provides a way of altering, and in some applications even tuning, the thermal curing behavior for a given polymer. Accordingly, such combinations may be used to provide system with cross-linkers having thermal curing behavior adapted to suit that processing temperature and degradation temperature of concern.

An embodiment, thus relates to a composition comprising a polymer, or an oligomer, comprising a cross-linking moiety, which moiety comprises a carbon-carbon triple bond, and a molecule comprising a carbon-carbon triple bond. In order to provide a composition with different thermal curing behavior compared to the one of the neat polymer or oligomer comprising the cross-linking moiety, the thermal curing behavior of the molecule should be different from the one of the polymer or oligomer comprising the cross-linking moiety.

Similarly, another embodiment relates to a process for altering the curing temperature profile of polymer, or an oligomer, comprising a cross-linking moiety, which moiety comprises a carbon-carbon triple bond. In such a process a polymer, or an oligomer, comprising cross-linking moiety, which moiety comprises a carbon-carbon triple bond is firstly provided. In order to provide a composition with altered thermal curing behavior compared to the one of the neat polymer or oligomer comprising a cross-linking moiety, a molecule comprising a carbon-carbon triple bond and having a thermal curing behavior different from the one of the polymer or oligomer is subsequently added to provide a composition, such as the one just described.

In this context it should be noted that the polymer, or the oligomer, comprising a cross-linking moiety, may be provided *in situ*, e.g. by melt mixing a cross-linker and polymer, or an oligomer, before, upon or after having added the molecule comprising a carbon-carbon triple bond.

Further, another embodiment relates to use of molecule comprising a carbon-carbon triple bond for altering the thermal curing behavior of a polymer, or an oligomer, comprising a cross-linking moiety, which moiety comprises a carbon-carbon triple bond. In order to alter the thermal curing behavior of the polymer, or the oligomer, the thermal curing behavior of the molecule should be different from the one of the polymer or the oligomer.

There are various examples of acetylenical cross-linkers known in the art to be incorporated into polymers and oligomers. Those include, but are not limited to, PEPA (phenylethynyl phthalic anhydride), EPA (ethynyl phthalic anhydride), PETA (5-(3-phenylpropioloyl)isobenzofuran-1,3-dione), MEPA (5-(prop-1-yn-1-yl)isobenzofuran-1,3-dione) and EBPA (5,5'-(ethyne-1,2-diyl)bis(isobenzofuran-1,3-dione).

The molecule added to alter the thermal curing behavior of the polymer, or the oligomer, may be of various kinds, as will be further discussed below. One example of a molecule to be used to alter the thermal curing behavior of the polymer, or the oligomer, is the condensation product of an aliphatic diamine, such as hexamethylene diamine, or an aromatic diamine, such phenylene diamine, and PEPA (phenylethynyl phthalic anhydride), EPA (ethynyl phthalic anhydride), PETA (5-(3-phenylpropioloyl)isobenzofuran-1,3-dione), or MEPA (5-(prop-1-yn-1-yl)isobenzofuran-1,3-dione).

Upon heat induced curing of such a composition, the thermal curing behavior of the composition will be different from the one of the neat of the polymer, or the oligomer. Typically, the thermal curing behavior of the composition will also be different from the one of the neat molecule.

In some instances, the thermal curing behavior of the composition, as determined by DSC, may have a curing peak temperature in between the curing peak temperature of the neat polymer, or the neat oligomer, and the curing peak temperature of the neat molecule. However, more importantly the ultimate melt viscosity is not changed while the onset of viscosity increase is shifted and the time required for ultimate viscosity is prolonged.

According to an embodiment, the temperature curing maximum of the molecule comprising a carbon-carbon triple bond is lower than the temperature curing maximum of the polymer, or said oligomer. By adding a molecule comprising a carbon-carbon triple bond and having lower temperature curing maximum than the polymer, or the oligomer, the polymer, or the oligomer may be cured at lower temperatures and/or higher rate than the neat polymer, or the oligomer. Thereby, temperatures and/or curing times detrimental to the polymer, or the oligomer, may be avoided upon curing the polymer, or the oligomer, while the polymer, or the oligomer, still may be processed without increasing the melt viscosity to levels making processing impossible. Further, the polymer, or the oligomer, may be provided with a cross-linking moiety without initiating curing, as the curing temperature is lowered only when the molecule comprising a carbon-carbon triple bond has been added.

For polymers such as PA46, PA6T and PA4T, a curing temperature in between the one of PEPA on one hand, and MEPA on the other may be preferred. In such an embodiment, the temperature curing maximum of the molecule comprising a carbon-carbon triple bond may be 10 to 100°C lower than the temperature curing maximum of the polymer, or the oligomer.

The thermal curing behavior of the molecule (cure onset, cure maximum and exothermic heat flow) comprising a carbon-carbon triple of the polymer, or the oligomer, respectively may be determined by running a DSC scan and applying a linear temperature increase of 1 to 100°C, such as about 10°C, per minute starting from preferably below the molecules softening point. According to an embodiment the DSC scan is initiated at 25°C. The speed with which the temperature is raised will affect the cure maximum, higher speed higher curing onset but exothermic heat flow remains constant. The thermogram may then be analyzed. The peak corresponding to exothermic heat flow may be integrated to determine the energy in the cure. Further, the intersect between the base line and the tangent of point of the largest slope determines the onset of the curing. Cure maximum of the peak is determined as the point of zero slope. Preferably, the curing temperature profile of the composition only comprises one temperature curing maximum.

According to another embodiment, the temperature curing maximum of the molecule comprising a carbon-carbon triple bond is higher than the temperature curing maximum of the polymer, or said oligomer. By adding a molecule comprising a carbon-carbon triple bond and having higher the temperature curing maximum than the polymer, or the oligomer, the polymer, or the oligomer, may be cured at somewhat higher temperatures than the neat polymer, or the oligomer. More importantly, addition of a molecule comprising a carbon-carbon triple bond and having higher temperature curing maximum than the polymer, or the oligomer, will imply that the melt viscosity will increase more slowly once curing has been initiated. Thereby, processing temperatures which would induce curing of the neat polymer, or the neat oligomer, may anyhow be used, as the processing may be finished before the melt viscosity has increased too much. The polymer, or the oligomer may however be cured at temperatures not being detrimental to the polymer, or the oligomer. For some applications, a curing rate for polymers, such as PA66, somewhat lower than the curing rate for MEPA may be preferred. In such an embodiment, the temperature curing maximum of the molecule comprising a carbon-carbon triple bond, as determined by DSC, may be 10 to 100°C higher than the temperature curing maximum of the polymer, the said oligomer. Preferably, the curing temperature profile of the composition only comprises one temperature curing maximum.

As already described, the thermal curing behavior of the molecule should be different from the one of the polymer or oligomer, in order to provide a composition with altered thermal curing behavior compared to the one of the neat polymer or oligomer comprising a cross-linking moiety. In general, the chemical groups next to the carbon-carbon triple bond will largely determine the thermal curing behavior of a molecule comprising a carbon-carbon triple bond. As an example, the thermal curing behavior of a MEPA residue (methyl and benzene moiety, respectively, next to the carbon-carbon triple bond) is different from the one of a PEPA residue (benzene moieties next to the carbon-carbon triple bond). Similarly, the thermal curing behavior of a PETA residue (carbonyl moiety and benzene moiety, respectively, next to the carbon-carbon triple bond) is different from the one of a PEPA residue (benzene moieties next to the carbon-carbon triple bond).

According to an embodiment, the polymer, or the oligomer, comprises a moiety according to formula (I):

A1-≡-B1- (I)

and the molecule comprises a moiety according to formula (II):

A2-≡-B2- (II)

In order for the thermal curing behavior of the molecule to be different from the one of the neat polymer or oligomer, A1, A2, B1 and B2 are selected in a manner such that A1≠A2 (i.e. A1 is distinct from A2) and/or B1≠B2 (i.e. B1 is distinct from B2).

A1 and A2 are, independently of each other, selected from the group consisting of H, methyl, a -CR₁R₂- moiety, wherein each of R₁ and R₂, is hydrogen or a chemical bond, an aryl, such as phenyl, an aromatic hydrocarbon moiety, such as a benzene moiety, and a -C(O)- moiety.

B1 and B2 are, independently of each other, selected from the group consisting of a -CR₁R₂- moiety, wherein each of R₁ and R₂, is hydrogen or a chemical bond, an aromatic hydrocarbon moiety, such as a benzene moiety, and a -C(O)- moiety.

In moieties according to formula (I) at least B1 is bound, directly or indirectly, to the polymer or oligomer. Similarly, in moieties according to formula (II) at least B2 is bound, directly or indirectly, to the molecule. Also, A1 may be bound to the polymer or oligomer. The carbon-carbon triple bond will then be present in-chain and not as an end-group. Similarly, also the carbon-carbon triple bond of the molecule may be present within the molecule and not as an end-group.

As an example:
- In a polymer, or an oligomer, comprising a PEPA residue, A1 will be phenyl and B 1 a benzene moiety;
- In a polymer, or an oligomer, comprising a MEPA residue, A1 will be methyl and B 1 a benzene moiety;
- In a polymer, or an oligomer, comprising a PETA residue, A1 will be phenyl and B1a -C(O)- moiety;
- In a polymer, or an oligomer, comprising a EPA residue, A1 will be hydrogen and B 1 a benzene moiety; and
- In a polymer, or an oligomer, comprising an EBPA residue, A1 and B1 will both be benzene moieties.

Further, examples of -CR₁R₂- moieties include -C(CH₃)₂- and -CH₂-.

According to an embodiment, formula (I) and (II) are independently selected from the following fragments:

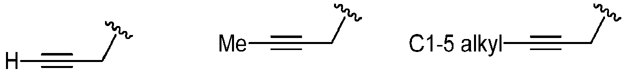

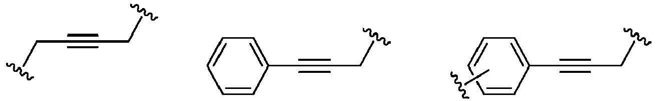

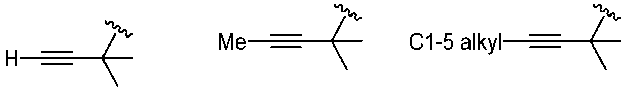

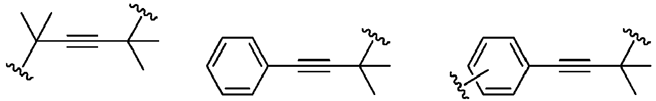

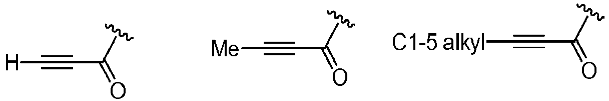

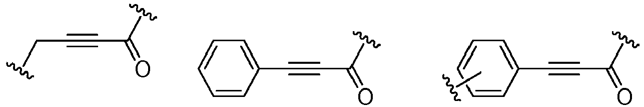

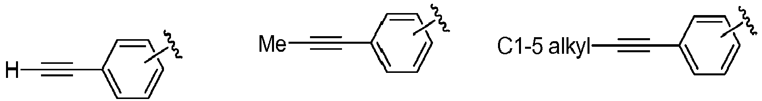

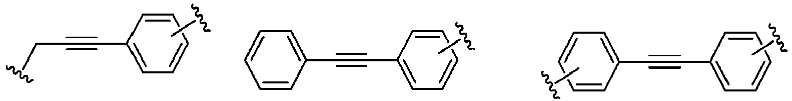

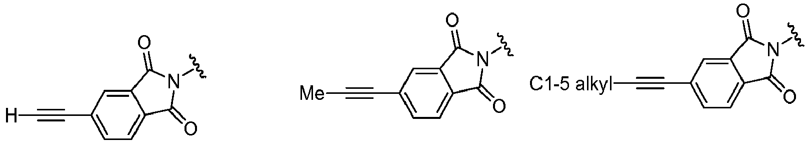

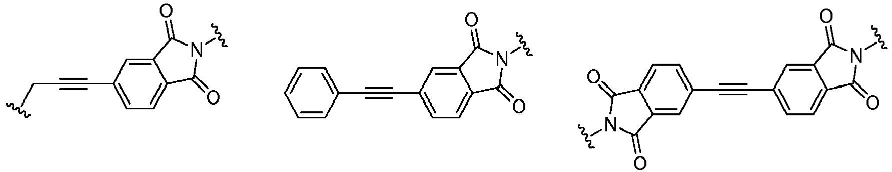

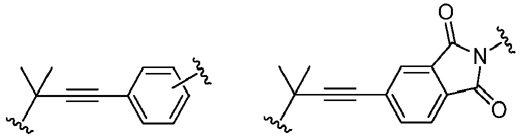

Although, specific regioisomerism has been shown for some of the fragments above, also use of fragments with other regioisomerism is, according to an embodiment, possible.

As A1≠A2 and/or B1≠B2, moieties according to formula (I) and (II), respectively, should be selected from different fragments.

As known in the art, acetylencial cross-linking may be employed for various types of polymers and oligomers. Polymers and oligomers having a melting point according to ASTM D3418 or ISO 11357-1/-3 of between 250-350°C represent on group of polymers and oligomers of special interest, as cross-linking system to be cured at higher temperatures than MEPA based system, but lower temperatures than PEPA based system, would be beneficial for such systems.

Also polymers and oligomers having a melting point according to ASTM D3418 or ISO 11357-1/-3 of less than 250°C represent one group of polymers and oligomers of interest. While such polymers and oligomers in theory may be processed at temperatures sufficiently low enough to avoid extensive curing, they may in practice require processing at higher temperatures to lower the melt viscosity. Typical examples of polymers of this type comprise aliphatic polyamides selected from the group consisting of: PA MXD6, PA11, PA12, PA6/10, PA6/12, and PA1010.

According to embodiment, the polymer or oligomer has a melting point according to ASTM D3418 or ISO 11357-1/-3 of 250°C to 280°C. For such polymers a slight decrease of the curing rate of MEPA is of interest. A typical example of a polymer of this type is PA66 having a melting point of 260 to 270°C.

According to embodiment, the polymer or oligomer has a melting point according to ASTM D3418 or ISO 11357-1/-3 of 280°C to 350°C, e.g. 280°C to 330°C. For such polymers a slight increase of the curing rate of PEPA is of interest. Typical examples of polymers of this type are polyphthalamides typically having a melting point of 290 to 330°C and PA46 having a melting point of about 300°C.

According to an embodiment, the polymer or oligomer is an aliphatic polyamide, e.g. PA MXD6, PA 3, PA46, PA6, PA66, PA610, PA612, PA69, PA1010, PA11, PA12 and blend and mixtures thereof.

According to an embodiment, the polymer or oligomer is a semi-aromatic polyamide, e.g. a polyphthalamide (PPA). Commonly used monomers to obtain semi-aromatic polyamide include diamines, such as hexamethylenediamine, m-xylylenediamine, tetramethylene diamine, decamethylene diamine, and 2-methylpentamethylene diamine. Commonly used monomers to obtain semi-aromatic polyamide include diacids, such as terephthalic acid, isophthalic acid, and adipic acid. In order to provide semi-aromatic polyamide which may be processed without thermally degrading the polymer combinations of more than one type of di-acid and or diamine is often employed.

Not only the melting temperature is decisive for identifying polymers of interest, but also the thermal stability, as it will affect the processing temperature to be used for a given temperature. Polymers and oligomers to be processed between 280 and 350°C represent on group of polymers and oligomers of special interest, as cross-linking system to be cured at higher temperatures than MEPA based system, but lower temperatures than PEPA based system, would be beneficial for such systems.

In order to be able to be efficiently processed, the melt viscosity according to ASTM 3835 of the polymer or oligomer should be lower than 50,000 Pa·s. Polymers and oligomers of special interest in respect of the concept disclosed herein are polymers and oligomers having a melt viscosity according to ASTM 3835 lower than 50,000 Pa·s at a temperature between 200 and 350°C, such as between 250 and 330°C. As well known to the skilled person the melt viscosity of a polymer or oligomer will gradually decrease upon increasing the temperature of the melt. Eventually, the polymer or oligomer will however start to degrade upon further increasing the temperature, thus putting a limit for the processing temperature.

Degradation of the polymer or oligomer will typically further decrease the melt viscosity. However, for some polymers, an increase of the melt viscosity will be seen although the polymer or oligomer is degraded. For such polymer or oligomers, the melt viscosity may be higher than 50,000 Pa·s at 350°C, i.e. the melt viscosity will pass through a minimum upon gradually increasing the temperature.

Further, polymers and oligomers of special interest in respect of the concept disclosed herein are polymers and oligomers having a melt viscosity according to ASTM 3835 of at least 10 Pa·s at 200°C, preferably at 230°C. A too low melt viscosity will make processing at such temperatures difficult.

According to an embodiment, the polymer or oligomer thus has a melt viscosity according to ASTM 3835 of at least 10 Pa·s at 200°C. Further, the polymer or oligomer has a melt viscosity according to ASTM 3835 of less than 50,000 Pa·s at a temperature between 200 and 350°C, such as between 250 and 330°.

Typically, the polymer, or the oligomer is provided with a cross-linking moiety, which moiety comprises a carbon-carbon triple bond, by end-capping a polymer, or an oligomer, with a cross-linker. Thus, the cross-linking moiety of the polymer, or the oligomer, according to an embodiment is an end-capper.

While various types of cross-linkers may be employed, examples of suitable cross-linkers for end-capping of polymers, or oligomers having at least one terminal amino group, e.g. polyamides, polyamideimides and polyimides, include cross-linkers comprising a phthalic anhydride moiety, such as PEPA (phenylethynyl phthalic anhydride), EPA (ethynyl phthalic anhydride), PETA (5-(3-phenylpropioloyl)isobenzofuran-1,3-dione), and MEPA (5-(prop-1-yn-1-yl)isobenzofuran-1,3-dione). Further, cross-linkers comprising two phthalic anhydride moieties, such as EBPA (5,5'-(ethyne-1,2-diyl)bis(isobenzofuran-1,3-dione), may be used as chain-extender for polymers, or oligomers having at least one terminal amino group.

According to an embodiment, the polymer, or the oligomer, has at least one terminal amino group and is provided with a cross-linking moiety, which moiety comprises a carbon-carbon triple bond, by end-capping the polymer, or the oligomer, with a cross-linker comprising a phthalic anhydride moiety. End-capping of polymers, and oligomers, may be performed by melt-mixing a cross-linker, such as a cross-linker comprising a phthalic anhydride moiety, with a polymer, or an oligomer, such as a polymer, or an oligomer, having at least one terminal amino group. The molecule used to alter the thermal curing behavior, may be added before, upon or after melt mixing the polymer, or oligomer, and cross-linker to end-cap the polymer, or oligomer.

While various types of cross-linkers may be employed for providing a polymer, or an oligomer, comprising cross-linking moiety, which moiety comprises a carbon-carbon triple bond, the polymer or oligomer according to an embodiment comprises a residue of PEPA (phenylethynyl phthalic anhydride), EPA (ethynyl phthalic anhydride), PETA (5-(3-phenylpropioloyl)isobenzofuran-1,3-dione), MEPA (5-(prop-1-yn-1-yl)isobenzofuran-1,3-dione) or EBPA (5,5'-(ethyne-1,2-diyl)bis(isobenzofuran-1,3-dione).

The molecule used to alter the thermal curing behavior, which also may be denoted curing temperature profile, of the polymer, or the oligomer, may be of various kind.

In some applications, also the molecule used to alter the curing temperature profile of the polymer, or the oligomer comprising a cross-linking moiety, which moiety comprises a carbon-carbon triple bond, i.e. a first polymer, or oligomer, may be a polymer, or oligomer, i.e. a second polymer, or oligomer, but different from the first one. As an example, a MEPA-end-capped aliphatic oligoamide may be used to alter the curing temperature profile of a PEPA-end-capped semi-aromatic polyamide.

In applications wherein the molecule is a second polymer or oligomer, the polymeric, or oligomeric, backbone may be the same. However, in order to be able to alter the curing temperature profile of the first polymer, or oligomer, the molecule has to be provided with a cross-moiety different from the one of the first polymer, or oligomer. As an example MEPA-end-capped PA66 may be used to alter the thermal curing behavior, i.e. increase the curing rate, of PEPA-end-capped PA66.

Furthermore, more commonly the molecule is not a second polymer, or oligomer, but a small molecule having a molecular weight of less than 750 g/mol. A small molecule will have higher mobility, whereby facilitating reaction of the various carbon-carbon triple bonds. Further, a small molecule will also provide a higher number of carbon-carbon bonds per weight unit, whereby a higher cross-linking density may be obtained. In addition the structure of a small molecule may be exactly controlled, in contrast to polymers which are provided as a distribution of polymers with different numbers of repeating units. As the exact structure of the molecule is known, better reproducibility may be obtained.

According to an embodiment, the molecule comprises at least two carbon-carbon triple bonds, such as 2, 3 or 4 carbon-carbon triple bonds. End-capping of a diamine, such as hexylenediamine or phenylenediamine (i.e. diaminobenzene), with an end-capper, such as MEPA, will provide a molecule with 2 carbon-carbon triple bonds. Similarly, end-capping of a tri-amine will provide a molecule with 3 carbon-carbon triple bonds, etc.

Various diamines may be used to obtain molecules comprising two carbon-carbon triple bonds.

According to an embodiment, the molecule comprising two carbon-carbon triple bonds comprises a residue of diamine comprising two aminomethylen-groups. Such diamines may be selected from the group consisting of:
- phenylen di-C₁₋₄ alkaneamines, e.g. 1,3-phenylenedimethanamine, 1,4-phenylenedimethanamine;
- alkyl substituted and unsubstituted C₄₋₁₂ alkylenediamines, e.g. hexamethylene diamine, pentamethylene diamine, 2,2,4-trimethyl-hexamethylene diamine, 2,4,4-trimethyl-hexamethylene diamine, and 1,4-diaminobutane; and
- diamines comprising a cyclohexane moiety, e.g. cyclohexane-1,4-diamine, cyclohexane-1,3-diamine, cyclohexane-1,4-diyldimethanamine, cyclohexane-1,3-diyldimethanamine, and bicyclo[2.2.1]heptane-2,5-diyldimethanamine.

According to another embodiment, the molecule comprising a two carbon-carbon triple bonds comprises a residue of aromatic diamine, such as a residue of 1,4-diaminobenzene and 1,3-diaminobenzene.

According to another embodiment, the molecule comprising two carbon-carbon triple bonds comprises a residue of ethylene diamine, hexamethylene diamine, xylene diamine, isophorone diamine, norborene diamine, meta phenylene diamine or para phenylene diamine.

According to another embodiment, the molecule comprising two carbon-carbon triple bonds comprises a residue of an amino terminated aliphatic oligoamide. Typically such amino terminated aliphatic oligoamides have a mass average molecular mass (M_{w}) of less than 3 kDa. Further, such amino terminated aliphatic oligoamides may be selected from the group consisting of oligoamides corresponding to PA46, PA66, PA610, PA612, PA69, and PA1010.

Cross-linkers which may be used to obtain molecules useful for altering the curing temperature profile of polymer, or an oligomer, comprising a cross-linking moiety, which moiety comprises a carbon-carbon triple bond, are according to an embodiment selected from the group consisting of:
- PEPA (phenylethynyl phthalic anhydride);
- EPA (ethynyl phthalic anhydride);
- PETA (5-(3-phenylpropioloyl)isobenzofuran-1,3-dione);
- MEPA (5-(prop-1-yn-1-yl)isobenzofuran-1,3-dione); and
- EBPA (5,5'-(ethyne-1,2-diyl)bis(isobenzofuran-1,3-dione).

Especially, PEPA (phenylethynyl phthalic anhydride), EPA (ethynyl phthalic anhydride), PETA (5-(3-phenylpropioloyl)isobenzofuran-1,3-dione) or MEPA (5-(prop-1-yn-1-yl)isobenzofuran-1,3-dione) may be used to end-cap a diamine, thereby providing molecules comprising 2 carbon-carbon triple bonds. In an embodiment, the molecule used to alter the curing temperature profile of the polymer or the oligomer, thus is a molecule obtainable by end-capping a diamine, such as any one of the diamines exemplified above, with PEPA (phenylethynyl phthalic anhydride), EPA (ethynyl phthalic anhydride), PETA (5-(3-phenylpropioloyl)isobenzofuran-1,3-dione), or MEPA (5-(prop-1-yn-1-yl)isobenzofuran-1,3-dione).

According to an embodiment, the composition provided by adding a molecule comprising a carbon-carbon triple bond to the polymer, or the oligomer, comprising a cross-linking moiety, which moiety comprises a carbon-carbon triple bond, comprises at least two different types of residues selected from the group consisting of residues of:
- PEPA (phenylethynyl phthalic anhydride);
- EPA (ethynyl phthalic anhydride);
- PETA (5-(3-phenylpropioloyl)isobenzofuran-1,3-dione);
- MEPA (5-(prop-1-yn-1-yl)isobenzofuran-1,3-dione); and
- EBPA (5,5'-(ethyne-1,2-diyl)bis(isobenzofuran-1,3-dione).

Without further elaboration, it is believed that one skilled in the art may, using the preceding description, utilize the present invention to its fullest extent. The preceding preferred specific embodiments are, therefore, to be construed as merely illustrative and not limitative of the disclosure in any way whatsoever.

Although the present invention has been described above with reference to specific embodiments, it is not intended to be limited to the specific form set forth herein. Rather, the invention is limited only by the accompanying claims and, other embodiments than the specific above are equally possible within the scope of these appended claims, e.g. different than those described above.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc do not preclude a plurality.

### Examples

The following examples are mere examples and should by no mean be interpreted to limit the scope of the invention. Rather, the invention is limited only by the accompanying claims.

### Abbreviations

- PEPA: Phenylethynyl phtalic anhydride
- MEPA: 5-(prop-1-yn-1-yl)isobenzofuran-1,3-dione
- PD-MEPA: 2,2'-(1,3-phenylene)bis(5-(prop-1-yn-1-yl)isoindoline-1,3-dione)
- HD-MEPA: 2,2'-(hexane-1,6-diyl)bis(5-(prop-1-yn-1-yl)isoindoline-1,3-dione)
- PD-PEPA: 2,2'-(1,4-phenylene)bis(5-(phenylethynyl)isoindoline-1,3-dione)
- HD-PEPA: 2,2'-(hexane-1,6-diyl)bis(5-(phenylethynyl)isoindoline-1,3-dione)

### Material

PEPA, phenylenediamine and hexylenediamine were obtained from commercial suppliers. MEPA, PD-MEPA and HD-MEPA were produced in accordance with the procedure described in WO 2012/052550. PD-PEPA and HD-PEPA were produced following same procedure as used for PD-MEPA and HD-MEPA.

A PA66 with an excess of amino end-groups was obtained from commercial suppliers.

PEPA and MEPA end-capped PA66 were obtained upon melt mixing PA66 with PEPA or MEPA, respectively, in double screw, co-rotating extruder as described below.

### Compounds

The various evaluated compounds were obtained by compounding using a ZSK 18 (Coperion) double screw, co-rotating extruder equipped with 18 mm diameter screws and a screw length:diameter ratio (L/D) of 40. The polymer was dried according to specification prior to compounding and pre-mixed with the cross-linker(s). Processing was performed at a flow rate of 2 kg/h at 270 dC and 200 rpm screw speed.

### Experiments

Figs. 1 to 3 were provided by running differential scanning calometri. The scan depicts heat flow as function of temperature. DSC was performed on a DSC Q2000 (TA Instruments) using a standard cell which was kept under nitrogen. Samples were weighed in to TZero Hermetic pans and sealed using TZero Hermetic lids. Empty pans and lids of same type were used for reference. The temperature was ramped at 10°C/min.

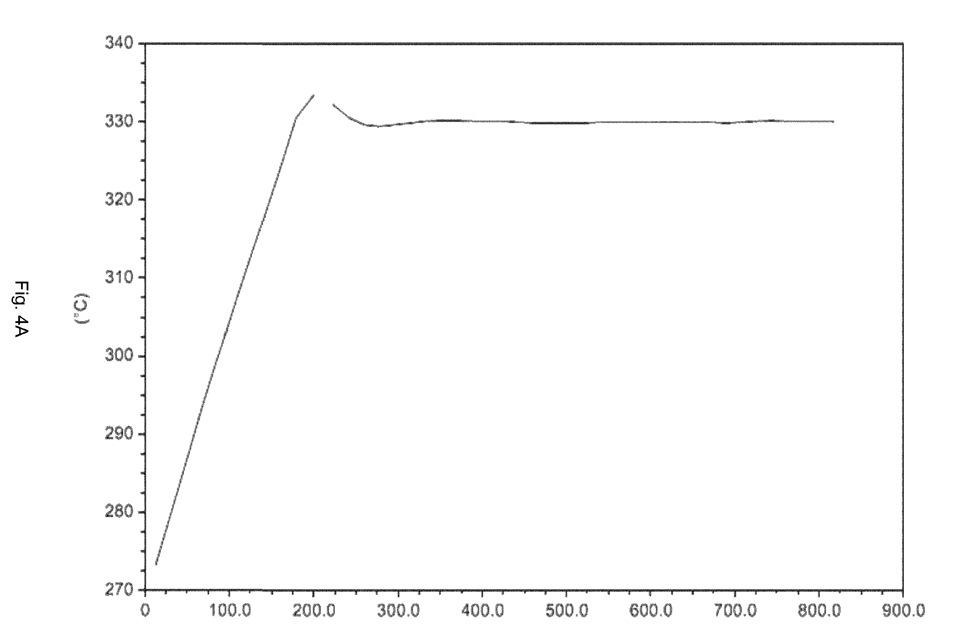

Figs. 4B-C were provided by rheology measurements. Figs. 4B-C depicts complex viscosity measured as function of time. The rheology measurements were performed on an ARES-G2 rheometer (TA Instruments) equipped with a Forced Convection Oven operating under nitrogen. Analysis was performed using parallell plates (Φ=25 mm) and a sample thickness of 1 mm. Initially, the temperature was increased at 20°C/min from the starting temperature of 270°C to 330°C, which was followed by an isothermal analysis for another 10 minutes (cf. FIG 4A). The angular frequency was 1 rad/s and the strain 1%.

## Claims

1. A composition comprising:
- a polymer, or an oligomer, comprising cross-linking moiety, which moiety comprises a carbon-carbon triple bond; and
- a molecule comprising a carbon-carbon triple bond;
wherein the thermal curing behavior of said molecule is different from the one of said polymer or oligomer.

2. The composition according to claim 1, wherein the polymer or oligomer comprises a moiety according to formula (I), and the molecule comprises a moiety according to formula (II),
A1-≡-B1- (I)
A2-≡-B2- (II)
wherein
A1≠A2 and/or B1≠B2;
A1 and A2 are, independently of each other, selected from the group consisting of H, methyl, a -CR₁R₂- moiety, wherein each of R₁ and R₂, is hydrogen or a chemical bond, an aryl, such as phenyl, an aromatic hydrocarbon moiety, such as a benzene moiety, and a -C(O)- moiety;
B1 and B2 are, independently of each other, selected from the group consisting of a -CR₁R₂- moiety, wherein each of R₁ and R₂, is hydrogen or a chemical bond, an aromatic hydrocarbon moiety, such as a benzene moiety, and a -C(O)- moiety;
at least B1 is bound, directly or indirectly, to the polymer or oligomer; and
at least B2 is bound, directly or indirectly, to the molecule.

3. The composition according to claim 2, wherein the moieties according to formula (I) and (II) are independently selected from the following fragments:

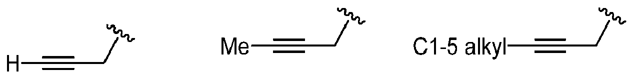

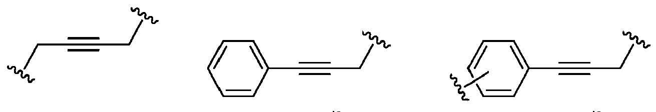

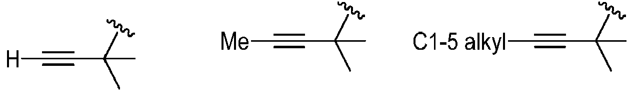

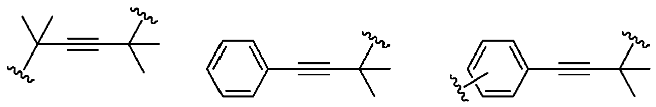

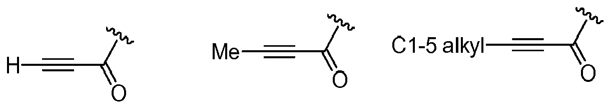

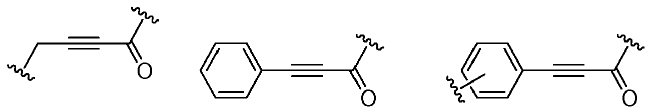

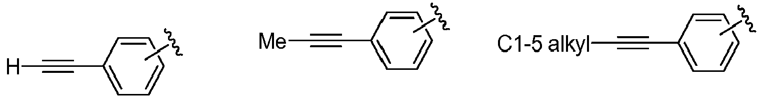

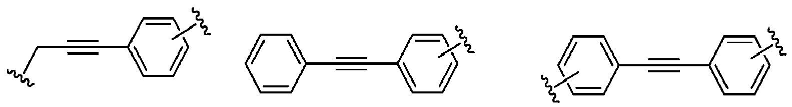

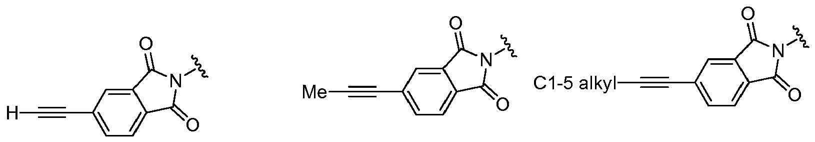

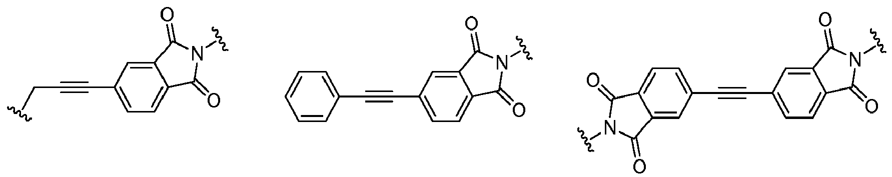

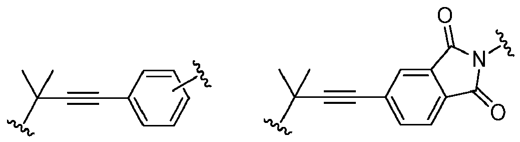

4. The composition according to claim 3, wherein
said polymer, or oligomer, comprises a residue of PEPA (phenylethynyl phthalic anhydride), EPA (ethynyl phthalic anhydride), PETA (5-(3-phenylpropioloyl)isobenzofuran-1,3-dione), MEPA (5-(prop-1-yn-1-yl)isobenzofuran-1,3-dione), or EBPA (5,5'-(ethyne-1,2-diyl)bis(isobenzofuran-1,3-dione);
said molecule comprises a residue of PEPA (phenylethynyl phthalic anhydride), EPA (ethynyl phthalic anhydride), PETA (5-(3-phenylpropioloyl)isobenzofuran-1,3-dione), MEPA (5-(prop-1-yn-1-yl)isobenzofuran-1,3-dione), or EBPA (5,5'-(ethyne-1,2-diyl)bis(isobenzofuran-1,3-dione); and
said composition comprises at least two different types of residues selected from the group consisting of residues of PEPA (phenylethynyl phthalic anhydride), EPA (ethynyl phthalic anhydride), PETA (5-(3-phenylpropioloyl)isobenzofuran-1,3-dione), MEPA (5-(prop-1-yn-1-yl)isobenzofuran-1,3-dione), and EBPA (5,5'-(ethyne-1,2-diyl)bis(isobenzofuran-1,3-dione).

5. The composition according to any one of the claims 1 to 4, wherein the temperature curing maximum of said molecule comprising a carbon-carbon triple bond, as determined by differential scanning calorimetry (DSC), is lower than the temperature curing maximum of said polymer, or said oligomer, as determined by differential scanning calorimetry (DSC); or
wherein the temperature curing maximum of said molecule comprising a carbon-carbon triple bond, as determined by differential scanning calorimetry (DSC), is higher than the temperature curing maximum of said polymer, or said oligomer, as determined by differential scanning calorimetry (DSC).

6. The composition according to any one of the claims 1 to 5, wherein said polymer, or oligomer, has a melt viscosity according to ASTM 3835 of at least 10 Pa·s at 200°C, and a melt viscosity according to ASTM 3835 of less than 50,000 Pa·s at a temperature between 200 and 350°C.

7. The composition according to any one of the claims 1 to 6, wherein said polymer, or oligomer has melting point according to ASTM D3418 or ISO 11357-1/-3 of between 250 and 350°C, such as between 250°C and 280°C or between 280°C and 330°C.

8. The composition according to any one of the claims 1 to 7, wherein said polymer, or oligomer, is an aliphatic polyamide, such as PA MXD6, PA 3, PA46, PA6, PA66, PA610, PA612, PA69, PA1010, PA11, PA12 and blends and mixtures thereof.

9. The composition according to any one of the claims 1 to 8, wherein said molecule also is a polymer, or oligomer, said polymer, or oligomer, being different from the polymer, or the oligomer, comprising the cross-linking moiety, which moiety comprises a carbon-carbon triple bond.

10. The composition according to any one of the claims 1 to 8, wherein the molecule is a molecule having a molecular weight of less than 750 g/mol.

11. The composition according to any one of the claims 1 to 10, wherein said molecule comprises at least two carbon-carbon triple bonds, such as 2 carbon-carbon triple bonds.

12. The composition according to claim 11, wherein said molecule is a molecule obtainable by end-capping a diamine with PEPA (phenylethynyl phthalic anhydride), EPA (ethynyl phthalic anhydride), PETA (5-(3-phenylpropioloyl)isobenzofuran-1,3-dione), or MEPA (5-(prop-1-yn-1-yl)isobenzofuran-1,3-dione); preferably said diamine is an aromatic diamine, such as 1,4-diaminobenzene or 1,3-diaminobenzene, or a diamine comprising two aminomethylen-groups, such as a diamine selected from the group consisting of:
phenylen di-C₁₋₄ alkaneamines, e.g. 1,3-phenylenedimethanamine, 1,4-phenylenedimethanamine;
alkyl substituted and unsubstituted C₄₋₁₂ alkylenediamines, e.g. hexamethylene diamine, pentamethylene diamine, 2,2,4-trimethyl-hexamethylene diamine, 2,4,4-trimethyl-hexamethylene diamine, and 1,4-diaminobutane; and
diamines comprising a cyclohexane moiety, e.g. cyclohexane-1,4-diamine, cyclohexane-1,3-diamine, cyclohexane-1,4-diyldimethanamine, cyclohexane-1,3-diyldimethanamine, and bicyclo[2.2.1]heptane-2,5-diyldimethanamine.

13. The composition according to any one of the claims 1 to 12, wherein
- said cross-linking moiety is a residue of PEPA and/or EBPA (5,5'-(ethyne-1,2-diyl)bis(isobenzofuran-1,3-dione); and
- said molecule comprises a residue of PETA (5-(3-phenylpropioloyl)isobenzofuran-1,3-dione) or MEPA; or wherein
- said cross-linking moiety is a residue of PETA (5-(3-phenylpropioloyl)isobenzofuran-1,3-dione) or MEPA; and
- said molecule comprises a residue of PEPA and/or EBPA (5,5'-(ethyne-1,2-diyl)bis(isobenzofuran-1,3-dione).

14. Use of molecule comprising a carbon-carbon triple bond for altering the thermal curing behavior of polymer, or an oligomer, comprising a cross-linking moiety, which moiety comprises a carbon-carbon triple bond, wherein the thermal curing behavior of said molecule is different from the one of said polymer or oligomer;
preferably the polymer, or the oligomer, is a polymer, or oligomer, according to any one of the claims 2 to 8, and 13; and the molecule is a molecule according to any one of the claims 2 to 5, and 9 to 13.

15. A process for altering the thermal curing behavior of polymer, or an oligomer, comprising a cross-linking moiety, which moiety comprises a carbon-carbon triple bond, wherein the process comprises the steps of:
- providing a polymer, or an oligomer, comprising a cross-linking moiety, which moiety comprises a carbon-carbon triple bond;
- adding a molecule comprising a carbon-carbon triple bond and having a thermal curing behavior different from the one of the polymer or oligomer, to provide a composition with altered thermal curing behavior compared to the one of the provided polymer or oligomer;
preferably the polymer, or the oligomer, is a polymer, or oligomer, according to any one of the claims 2 to 8, and 13; and the molecule is a molecule according to any one of the claims 2 to 5, and 9 to 13.
